# EUROPEAN PATENT SPECIFICATION

(11) **EP 1 445 473 B1**
(45) Date of publication and mention of the grant of the patent: **09.01.2008**
(21) Application number: 03002401.2
(22) Date of filing: 04.02.2003
(51) Int. Cl.: F02M 51/06, F02M 61/16, F16K 31/00

(54) **Metering device with dynamic sealing**
Dosiervorrichtung mit dynamischer Dichtung
Dispositif de dosage avec joint dynamique

(43) Date of publication of application: 11.08.2004
(73) Proprietor: Siemens VDO Automotive S.p.A., 56040 Fauglia (Pisa) (IT)
(72) Inventor: Gestri, Luca, 56023 S. Lorenzo A.C.-Cascina (IT); Matteucci, Luca, 56124 Pisa (IT)
(74) Representative: Maier, Daniel Oliver

(56) References cited:
- EP-A- 1 046 809
- EP-A- 1 079 099
- EP-A- 1 079 158
- EP-A- 1 111 230
- WO-A-03/012283
- DE-A- 19 838 862

## Description

The present invention relates to a metering device for dosing pressurized fluids, in particular an injection valve for a fuel injection system in an internal combustion engine, comprising a valve body with a fluid chamber for the pressurized fluid to be dosed, the fluid chamber terminating with a metering opening, an axially moveable valve needle passing through the fluid chamber, the valve needle having a first end that controls the opening and closing of the metering opening, and a second end that cooperates with an actuator assembly arranged in an actuator chamber and controlling the axial movement of the valve needle for opening the metering opening, a helical spring that biases the valve needle to close the metering opening by providing a force against an abutting washer connected to said valve needle, and a sealing element hydraulically isolating the actuator chamber and the fluid chamber.

Such a metering device is disclosed for example in the European Patent application EP 1 046 809 A2.

In the manufacture of piezoelectric actuator-controlled valves for high-pressure direct injection for gasoline engines, it is essential to provide a hydraulic sealing capable of isolating the space through which the pressurized gasoline travels, i.e. a fluid chamber, from that where the actuator is arranged, i.e. an actuator chamber.

Fundamental requirements for this sealing element are
- the ability to operate at high pressures of the fluid, exceeding 200 bar, and at its related peaks of pressure and hydraulic ram induced by the opening and closing of the injector needle,
- the guarantee of effectiveness during the whole expected lifetime of the injector, including resistance to breakage, creep, fatigue loading, and the like,
- satisfactory service life of the component in its operating environment, including chemical tolerance to gasoline, resistance to terminal stresses, and the like,
- a minimum number of mechanical parts and a total reliability of the element, and
- minimal material, manufacturing and assembly times and costs.

In the metering devices described in EP 1 046 809 A2, one of which is exemplary shown in Fig. 2, the valve body 1 comprises an actuator chamber 9 and a fluid chamber 2 terminating with a metering opening 3, between which chambers the sealing element 101 - 10n is arranged. The axially moveable valve needle 4 passes through the fluid chamber 2. The valve needle 4 has a first end 5 that controls the opening and closing of the metering opening 3, and a second end 6 that cooperates with the actuator assembly 7, 8 arranged in the actuator chamber 9 and controlling the axial movement of the valve needle 4. The actuator assembly comprises a piezo stack 7 and a bottom cap 8. The bottom cap 8 of the actuator assembly is in Hertzian contact with the second end 6 of the valve needle 4, since the second end 6 of the valve needle 4 is biased against the bottom cap 8 by a helical spring 12, which is axially compressed arranged between a spring seat 14 of the valve body 1 and an abutting washer 13 fastened to the valve needle 4.

The sealing element 101 - 10n is formed by a metal bellows 101, an element able to be axially deformed and to guarantee the required separation between the two described volumes, e.g. gasoline in the fluid chamber 2 and the piezo stack 7 as part of the actuator assembly outside, i.e. in the actuator chamber 9. The top collar of the metal bellows 101 is attached to a washer 10m that is attached on the valve needle 4 and the bottom collar of the metal bellows 101 is attached to a ring element 10n attached to the inner cylindrical surface 11 of the valve body 1. The metal bellows 101 offers a high mechanical elasticity in the direction of movement of the valve needle 4, a sufficient resistance to fuel pressures of up to 500 bar, and a high reliability with respect to leakage throughout the required temperature range of -40 °C to +150 °C. However, an injector with such a metal bellows with these dimensions has disadvantages of high component and manufacturing costs, as well as a complex assembly, requiring two hermetic welds to attach the metal bellows to the washer 10m and to the ring element 10n, as well as two hermetic welds to attach the washer 10m to the valve needle 4 and the ring element 10n to the inner cylindrical surface 11 of the valve body 1.

EP 1 079 158 A2 discloses a metering device with a valve needle, a piezoactuator with a bottom cap arranged at one axial end and a hydraulic piston arranged at the other axial end and metal bellows. The bottom cap of the piezoactuator is welded to the valve needle. One end of the metal bellows is hermetically welded to the hydraulic piston and the other end of the metal bellows is welded to the bottom cap of the piezoactuator to isolate the piezoactuator from a working chamber. The valve needle, the piezoactuator with the bottom cap, the hydraulic piston and the metal bellows are movable in axial direction in a housing.

In view of the foregoing, it is the object underlying the present invention to provide a metering device of the above-mentioned type which is easier and more economic to manufacture, while still fulfilling the requirements specified above.

This object is achieved by a metering device with the features of appended claim 1.

Advantageous embodiments of the metering device according to the present invention are disclosed in the respective following dependent claims.

According to the invention, in a metering device with the features of claim 1, the abutting washer is hermetically fastened to the valve needle, and the sealing element is formed by an elastic element that is hermetically fastened to the valve body and to the abutting washer. The sealing element comprises a metal bellows which is hermetically connected at its upper collar with the abutting washer and at its lower collar with a spring seat of the valve body provided for the helical spring. Thus, the sealing may be applied differently than in prior art, thereby providing additional liberty in the design of the device so that different requirements may by individually fulfilled. By using a metal bellows, the present invention can build on experiences with prior art devices. A special arrangement of the metal bellows provides additional liberty with respect to the design of the device.

In the metering device according to the present invention, further preferably, the metal bellows is designed to resist a deformation due to peaks of pressure generated in the fluid chamber due to the impingement of forces from the actuator assembly to the second end of the valve needle. Thus, the general requirements can be fulfilled.

In the metering device according to the present invention, alternatively or additionally further preferably, the sealing element comprises a rubber element designed to fit between the metal bellows and an inner surface of the valve body and being arranged to be in contact with the metal bellows on the side of the actuator chamber. Thereby, robustness is conferred to the sealing.

In the metering device according to the present invention, the hermetical connection between two elements might comprise the welding of these elements.

The invention, both its construction and its method of operation together with additional objects and advantages thereof, will be best understood from the following description of a specific exemplary embodiment thereof taken in conjunction with the accompanying drawings, wherein
- Fig. 1: is a schematic axial cross section of a part of an injection valve according to the present invention; and
- Fig. 2: is a schematic axial cross section of an injection valve according to the prior art.

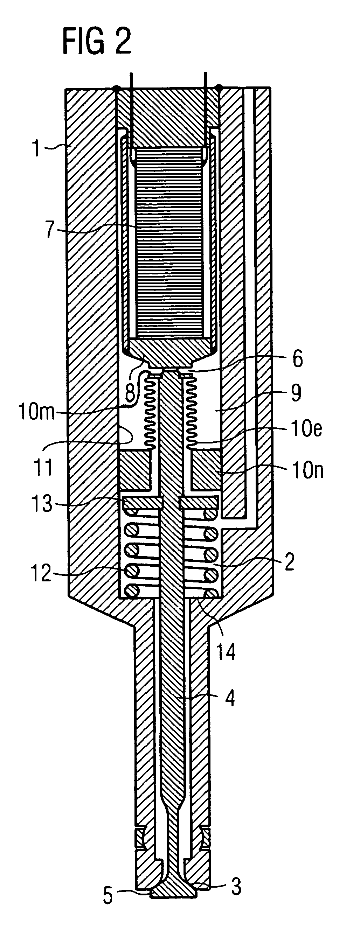

In the following description of an exemplary embodiment according to the present invention the same reference signs as those shown in Fig. 2 denote the same or equal parts that have basically the same functionality. These parts might have a slightly different arrangement in respect to each other than that shown in Fig. 2, but nevertheless have the same functionality as is apparent to the skilled person. Therefore, a detailed description of those parts is omitted here and only the differences of the metering device according to the present invention are described in detail.

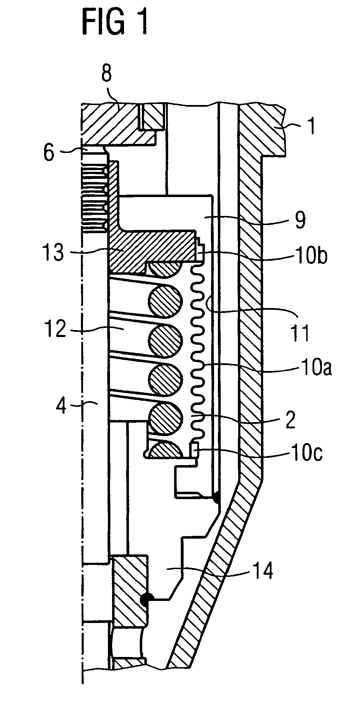

According to the present invention, as shown in Fig. 1, the hermetic sealing between the fluid chamber 2 and the actuator chamber 9 is performed by a metal bellows 10a with standard and experienced dimensions, which is rigidly and hermetically connected, e.g. by welding, at its upper collar 10b to an abutting washer 13 attached to the valve needle 4. The helical spring 12 that biases the valve needle 4 to close the metering opening 3 is arranged between this abutting washer 13 and a spring seat 14 of the valve body 1. The lower collar 10c of the metal bellows 10a is rigidly and hermetically connected, e.g. by welding, to the spring seat 14 of the valve body 1. The metal bellows 10d is able to resist to the deformations due to peaks of pressure within the fluid chamber. In order to confer robustness to this sealing, between the inner cylindrical surface 11 of the valve body 1 and the metal bellows 10a, a not shown elastic element might be arranged that preferably shows a cross section adapted to that of the metal bellows 10a. Since according to the present invention the helical spring 12 that provides the bias of the valve needle 4 to close the metering opening 3 is "immersed" in the fluid, the fluid chamber might be designed rather big which leads to less high peaks of pressure.

A metering device for dosing pressurized fluids, in particular an injection valve for a fuel injection system in an internal combustion engine, is disclosed in which a metal bellows as the hermetic sealing between the fluid chamber for the pressurized fluid to be dosed and the actuator chamber is provided hermetically fastened to an abutting washer that is attached to the valve needle and to a spring seat of the valve body, between which elements the helical spring is arranged that biases the valve needle to close the metering opening.

The features disclosed in the foregoing description, in the drawings, and in the claims may alone as well as in any possible combination be important for the realisation of the invention as defined in the appended claims.

## Claims

1. A metering device for dosing pressurized fluids, in particular an injection valve for a fuel injection system in an internal combustion engine, comprising
- a valve body (1, 14) comprising a fluid chamber (2) for the pressurized fluid to be dosed, the fluid chamber (2) terminating with a metering opening (3),
- an axially moveable valve needle (4) passing through the fluid chamber (2), the valve needle (4) having a first end (5) that controls the opening and closing of the metering opening (3), and a second end (6) that cooperates with an actuator assembly (7, 8) arranged in an actuator chamber (9) and controlling the axial movement of the valve needle (4) for opening the metering opening (3),
- a helical spring (12) that biases the valve needle (4) to close the metering opening (3) by providing a force against an abutting washer (13) that is hermetically fastened to said valve needle, and
- a sealing element (10a - 10c) hydraulically isolating the actuator chamber (9) and the fluid chamber (2),
**characterized in that**
the sealing element (10a - 10c) is formed by an elastic element that is hermetically fastened to the valve body (1, 14) and to the abutting washer (13) and the sealing element comprises a metal bellows (10a) which is hermetically connected at its upper collar (10b) with the abutting washer (13) and at its lower collar (10c) with a spring seat (14) of the valve body (1) provided for the helical spring (12).

2. The metering device according to claim 1,
**characterized in that**
the metal bellows (10d) is designed to resist a deformation due to peaks of pressure generated in the fluid chamber (2) due to the impingement of forces from the actuator assembly (7, 8) to the second end (6) of the valve needle (4).

3. The metering device according to claim 1 or 2, **characterized in that**
the sealing element comprises a rubber element designed to fit between the metal bellows (10a) and an inner surface (11) of the valve body (1) and being arranged to be in contact with the metal bellows (10a) on the side of the actuator chamber (9).

4. The metering device according to anyone of claims 1 to 3,
**characterized in that**
the hermetical connection between two elements comprises the welding of these elements.

## Patentansprüche

1. Dosiervorrichtung zum Dosieren von unter Druck stehenden Fluiden, insbesondere Einspritzventil für ein Kraftstoffeinspritzsystem in einer Brennkraftmaschine, mit
- einem Ventilkörper (1, 14), der eine Fluidkammer (2) für das zu dosierende, unter Druck stehende Fluid aufweist, wobei die Fluidkammer (2) mit einer Dosieröffnung (3) endet,
- einer axial beweglichen Ventilnadel (4), die sich durch die Fluidkammer (2) erstreckt und ein erstes Ende (5), das das Öffnen und Schließen der Dosieröffnung (3) steuert, sowie ein zweites Ende (6) besitzt, das mit einer Betätigungseinheit (7, 8) zusammenwirkt, welche in einer Betätigungskammer (9) angeordnet ist und die Axialbewegung der Ventilnadel (4) zum Öffnen der Dosieröffnung (3) steuert,
- einer Schraubenfeder (12), die die Ventilnadel (4) zum Schließen der Dosieröffnung (3) vorspannt, indem sie eine Kraft gegen eine Anschlagscheibe (13) aufbringt, die auf hermetisch abgedichtete Weise an der Ventilnadel befestigt ist, und
- einem Dichtungselement (10a-10c), das die Betätigungskammer (9) und die Fluidkammer (2) hydraulisch iso- liert,
**dadurch gekennzeichnet, dass** das Dichtungselement (10a-10c) von einem elastischen Element gebildet ist, das auf hermetisch abgedichtete Weise am Ventilkörper (1,14) und an der Anschlagsscheibe (13) befestigt ist, und dass das Dichtungselement einen Metallbalg (10a) umfasst, der an seiner oberen Manschette (10b) auf hermetisch abgedichtete Weise mit der Anschlagscheibe (13) und an seiner unteren Manschette (10c) mit einem Federsitz (14) des Ventilkörpers (1), der für die Schraubenfeder (12) vorgesehen ist, verbunden ist.

2. Dosiervorrichtung nach Anspruch 1, **dadurch gekennzeichnet, dass** der Metallbalg (10d) so ausgebildet ist, dass er einer Verformung infolge von Druckspitzen, die in der Fluidkammer (2) aufgrund des Angriffes von Kräften von der Betätigungseinheit (7,8) am zweiten Ende (6) der Ventilnadel (4) erzeugt werden, widersteht.

3. Dosiervorrichtung nach Anspruch 1 oder 2, **dadurch gekennzeichnet, dass** das Dichtungselement ein Gummielement umfasst, das so ausgebildet ist, dass es zwischen den Metallbalg (10a) und eine Innenfläche (11) des Ventilkörpers (1) passt, und das so angeordnet ist, dass es mit dem Metallbalg (10a) auf der Seite der Betätigungskammer (9) in Kontakt steht.

4. Dosiervorrichtung nach einem der Ansprüche 1-3, **dadurch gekennzeichnet, dass** die hermetisch abgedichtete Verbindung zwischen zwei Elementen das Verschweißen dieser Elemente umfasst.

## Revendications

1. Dispositif de dosage destiné à doser des fluides pressurisés, en particulier, soupape d'injection pour un système d'injection de carburant dans un moteur à combustion interne, comprenant :
- un corps de soupape (1, 14) comprenant une chambre de fluide (2) pour le fluide pressurisé devant être dosé, la chambre de fluide (2) se terminant par une ouverture de dosage (3),
- un pointeau de soupape à déplacement axial (4) passant à travers la chambre de fluide (2), le pointeau de soupape (4) ayant une première extrémité (5) qui commande l'ouverture et la fermeture de l'ouverture de dosage (3), et une seconde extrémité (6) qui coopère avec un ensemble actionneur (7, 8) agencé dans une chambre d'actionneur (9) et commandant le mouvement axial du pointeau de soupape (4) pour ouvrir l'ouverture de dosage (3),
- un ressort hélicoïdal (12) qui amène le pointeau de soupape (4) à fermer l'ouverture de dosage (3) en appliquant une force contre une rondelle attenante (13) qui est fixée hermétiquement audit pointeau de soupape, et
- un élément d'étanchéité (10a - 10c) isolant hydrauliquement la chambre d'actionneur (9) et la chambre de fluide (2),
**caractérisé en ce que** l'élément d'étanchéité (10a - 10c) est formé par un élément élastique qui est fixé hermétiquement au corps de soupape (1, 14) et à la rondelle attenante (13) et l'élément d'étanchéité comprend un soufflet métallique (10a) qui est relié hermétiquement au niveau de son collier supérieur (10b) à la rondelle attenante (13) et au niveau de son collier inférieur (10c) à un siège de ressort (14) du corps de soupape (1) prévu pour le ressort hélicoïdal (12).

2. Dispositif de dosage selon la revendication 1, **caractérisé en ce que** le soufflet métallique (10d) est conçu pour résister à une déformation due aux pics de pression générés dans la chambre de fluide (2) en raison de l'application de forces exercées par l'ensemble actionneur (7, 8) sur la seconde extrémité (6) du pointeau de soupape (4).

3. Dispositif de dosage selon la revendication 1 ou 2, **caractérisé en ce que** l'élément d'étanchéité comprend un élément en caoutchouc conçu pour s'adapter entre le soufflet métallique (10a) et une surface interne (11) du corps de soupape (1) et étant agencé pour être en contact avec le soufflet métallique (10a) sur le côté de la chambre d'actionneur (9).

4. Dispositif de dosage selon l'une quelconque des revendications 1 à 3,
**caractérisé en ce que** la liaison hermétique entre deux éléments comprend le soudage de ces éléments.
